(19) Europäisches Patentamt
European Patent Office
Office européen des brevets

(11) Numéro de publication: **0 174 894**
**B1**

(12) # FASCICULE DE BREVET EUROPEEN

(45) Date de publication du fascicule du brevet: **02.01.91**

(51) Int. Cl.[5]: **H 01 M 6/18**, H 01 B 1/12, C 08 G 65/04, C 08 G 79/10

(21) Numéro de dépôt: **85401743.1**

(22) Date de dépôt: **06.09.85**

(54) **Electrolyte solide polymère constitué par un copolymère réticulé.**

(30) Priorité: **11.09.84 FR 8413925**

(43) Date de publication de la demande:
**19.03.86 Bulletin 86/12**

(45) Mention de la délivrance du brevet:
**02.01.91 Bulletin 91/01**

(84) Etats contractants désignés:
**AT BE CH DE GB IT LI LU NL SE**

(56) Documents cités:
**EP-A-0 037 776**
**EP-A-0 078 505**
**EP-A-0 119 912**
**EP-A-0 149 393**
**DE-A-3 317 761**
**FR-A-1 229 090**
**GB-A-2 118 763**

(73) Titulaire: **SOCIETE NATIONALE ELF AQUITAINE**
**Tour Elf, 2, Place de la Coupole, La Défense 6**
**F-92400 Courbevoie (FR)**

(72) Inventeur: **Muller, Daniel**
**12 Rue Frédéric Mistral**
**F-64000 Pau (FR)**
Inventeur: **Chabagno, Jean-Michel**
**2, rue Alphonse Cadier**
**F-64000 Pau (FR)**

(74) Mandataire: **Boillot, Marc**
**SOCIETE NATIONALE ELF AQUITAINE Division**
**Propriété Industrielle Tour Elf**
**F-92078 Paris la Défense Cédex 45 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 174 894 B1

## Description

La présente invention concerne un matériau macromoléculaire à conduction ionique (ou électrolyte solide polymère) constitué d'une solution d'un sel (composé ionique) dans une copolymère réticulé statistique de l'oxyde d'éthylène et d'au moins un deuximème motif choisi pour conserver à la chaîne son caractère de polyéther.

Le principe des électrolytes solides polymère est décrit dans le brevet européen 13199 qui prévoit l'utilisation, en tant que matériau macromléculaire, d'homopolymères, en particulier de polyéther ou encore de copolymères. Dans la citation FR—A—2 485 274, intitulée "Electrolyte solide à base de matériau macromoléculaire à conduction ionique", on a proposé d'utiliser comme électrolyte un matériau complexe élastomère réticulé. La réticulation se fait à partir de polymères contenant des fonctions hydroxyles réticulables par des isocyanates, ce qui conduit à des réseaux uréthannes dans lesquels lesdites fonctions sont susceptibles de réagir avec les éléments de l'anode et/ou de la cathode et de générer une dégradation du polymère, qui ne pourra plus alors jouer son rôle de liant élastomère, concomitante à une consommation d'une partie des matériaux de cathode ou d'anode par oxydation ou réduction irréversible.

Les produits obtenus selon cette technique de réticulation présentent, du fait de la taille importante des noeuds du réseau initié par des isocyanates, en particulier dans le cas des isocyanates aliphatiques, un pourcentage volumique (ou massique) important de partie non solvatante du cation, ce qui peut pénaliser les dissolutions et/ou la dissociation du sel entraînant par là une baisse de conductivité. Si on veut remédier à la mauvaise solvatation, ou peut prévoir d'augmenter le poids moléculaire du polymère fonctionnel de départ, mais cela conduit en général à une diminution de la conductivité ionique du complexe polyéthersel par apparition de phénomènes de cristallisation à basse température.

Afin de minimiser ce phénomènes de cristallisation, cette même citation décrit des modes de réalisation qui concernent des copolymères à base d'oxyde d'éthylène avec des proportions très variées de deuxième motif par rapport à l'oxyde d'éthylène, ces copolymères étant principalement des copolymères tri-séquencés.

Pour ces copolymères séquencés, en particulier les copolymères tri-séquencés, oxyde d'éthylène/oxyde de propylène/oxyde d'éthylène (OE—OP—OE), il est difficile d'augmenter le poids moléculaire car on observe rapidement des phénomènes de ségrégation de phases de sorte que l'on retrouve les inconvénients des homopolymères correspondants à température ambiante.

De façon à améliorer les caractérisiques de ces électrolytes, en particulier les properiétés de conductivité à température ambiante, l'invention prévoit un matériau macromoléculaire à conduction ionique constitué d'une solution d'un sel dans un copolymère réticulé statistique de l'oxyde d'éthylène et d'au moins un deuxième motif choisi pour conserver à la chaîne son caractère de polyéther et présent dans le copolymère en quantité molaire comprise entre 1,5 et 30% et se caractérisant en ce que ledit copolymère réticulé statistique renferme des ponts de réticulation comportant au moins un atome d'un élément au moins divalent choisi parmi silicium, cadmium, bore, titane, aluminium, zinc, magnésium et étain ou bien résulte de la réticulation par voie radicalaire ou ionique d'insaturations réparties le long ou en bout des chaînes du copolymère non réticulé correspondant.

Le pourcentage molaire est exprimé par rapport au nombre total de motifs monomères.

Pour mettre en oeuvre l'invention, on choisira de préférence un copolymère dont le deuxième motif est choisi

parmi les éthers-cycliques de formule

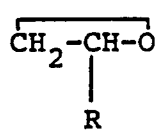

dans laquelle R représente, soit un radical Ra, alkyle, alcényle ou alcynyle, comprenant notamment de 1 à 12 et de préférence de 1 à 4 atomes de carbone, soit un radical $CH_2$—O—Re—Ra, dans lequel Ra a la même signification que ci-dessus et Re représente un radical polyéther de formule $(CH_2—CH_2—O)_p$, p variant de 0 à 10,

et parmi les éthers-cycliques, substitués ou non, dont le cycle comporte plus de trois maillons.

A titre d'exemples, les éthers cycliques à plus de trois maillons dans le cycle peuvent être: le tétrahydrofuranne, le 1—3 dioxanne, le dioxolanne et leurs dérivés substitués, ou encore des composés cycliques du type oxétanne.

Selon un premier mode de réalisation, le radical R peut être un radical alkyle, de préférence un radical méthyle, et le deuxième motif est présente à raison d'au plus 25%, en pourcentage molaire par rapport au nombre total de motifs monomères. Ce pourcentage est choisi en fonction de la nature du sel en solution et de la température d'utilisation. D'une manière préférentielle, ce pourcentage est compris entre 1,5 et 25% quand le sel est du perchlorate de lithium et il est compris entre 5 et 25% quand le sel est le trifluorométhanesulfonate de lithium.

Pour les copolymères réticulés statistiques selon l'invention, qui renferment des ponts de réticulation comportant au moins un atome d'un élément au moins divalent choisi parmi les éléments cités plus haut, ledit atome est relié à au moins une chaîne polymérique, de préférence, par un atome d'oxygène.

Pour obtenir les materiaux macromoléculaires statistiques réticulés à conduction ionique, selon l'invention, on pourra utiliser toute méthode de réticulation permettant de produire le copolymères réticulés choisi. Les copolymères réticulés statistiques selon l'invention, qui renferment des ponts de réticulation comportant au moins un atome d'un élément au moins divalent tel que défini plus haut, ledit atome étant reliés à au moins un chaîne polymérique, de préférence, par un atome d'oxygène, sont obtenus par réactions de fonctions réticulables du copolymère non réticulé sur un ou des agents de réticulation propres à fournir lesdits ponts de réticulation et en particulier des ponts de réticulation comportant un atome de l'élément divalent relié par un atome d'oxygène à au moins une chaîne polymérique.

On pourra par exemple utiliser les méthodes de réticulation par réaction de fonctions hydroxyles latérales ou terminales ou leurs sels métalliques de polymères de type polyéther, décrites dans les demandes de brevet français n° 84 00006 du 2 Janvier 1984 et n° 84 08417 déposée le 29 Mai 1984 correspondant respectivement aux demandes de brevet européen n° 84 402684 (publication N° 0149393) du 20/12/84 et N° 85 401026 (publication N° 0163576) du 24/05/85.

Les copolymères statistiques réticulés résultant de la réticulation par voie radicalaire d'insaturation réparties le long ou en bout des chaines du copolymère non réticulé, peuvent être obtenus en faisant appel à une réticulation par l'intermédiaire d'un générateur de radicaux libres tel que l'azobisisobutyronitrile ou encore à une réticulation par irradiation (UV, rayons $\gamma$, . . .) en présence ou non d'un photosensibilisateur.

Les copolymères selon l'invention sont réticulés de préférence tri-dimensionnellement de façon à former des réseaux, mais l'invention n'exclut pas la présence dans le matériau macromoléculaire à conduction ionique de ponts de liaison bi-dimensionnelle.

Ainsi qu'il apparaîtra des exemples suivants, l'invention procure des matériaux à conduction ionique qui présentent des propriétés améliorée par rapport aux copolymères non réticulés et par rapport aux monopolymères et aux copolymères séquencés réticulés décrits dans citation FR—A—2 485 274. En particulier, on améliore la conductivité ionique de ces matériaux à température ambiante. Cette amélioration peut être attribuée au fait que l'utilisation de copolymères statistiques permet d'accroître les poids moléculaires des oligomères de départ et ainsi de minimiser l'influence négative des noeuds de réticulation sans pour cela faire apparaître de phénomènes de cristallisation et/ou de ségrégation de phase à basse température. Un avantage complémentaire que procure l'invention par rapport à un copolymère séquencés réside dans la diminution du nombre de transport anionique.

Mais l'invention et ses avantages seront mieux compris à la lecture des exemples comparatifs suivants qui ne doivent, cependant, pas être considérés comme limitatifs.

Dans ces exemples, on compare des matériaux selon l'invention à des matériaux décrits dans l'art antérieur. En particulier, ces materiaux de l'art antérieur sont constitués par des homopolymères réticulés, des mélanges d'homopolymères, des copolymères réticulés séquencés comportant des noeuds de réticulation importants, tels que ceux décrits dans la citation FR—A—2 485 274. Pour tous ces matériaux, on compare les témperatures pour lesquelles on obtient:

$$\sigma = 10^{-6}(\Omega^{-1}cm^{-1})\text{: T-6}$$
$$\sigma = 10^{-5}(\Omega^{-1}cm^{-1})\text{: T-5}$$
$$\sigma = 10^{-4}(\Omega^{-1}cm^{-1})\text{: T-4}$$

### Exemple 1

On réalise un polyoxyde d'éthylène réticulé à partir d'un polyoxyde d'éthylène glycol de poids moléculaire 3000, d'une part en le réticulant en présence de tri-isocyanate aliphatique, d'autre part en le réticulant en présence de méthyltrichlorosilane, et enfin en le réticulant en présence de tri-octylaluminium.

Les trois matériaux macromoléculaires contiennent en solution du perchlorate de lithium avec un rapport O/Li = 12.

Le premier matériau se présente sous la forme d'un réseau qui comporte des ponts de réticulation importants, du type polyuréthanne, le second et le troisième comportent des ponts courts.

Les résultats de conductivité obtenus sont notés en (1) dans le tableau I.

### Exemple 2

Dans cet exemple, on réalise des essais identiques aux essais précédentes, mais en utilisant un copolymère triséquencé OE—OP—OE, de poids moeleculaire égal à 8500, avec un rapport O/Li = 12.

Les résultants obtenus pour les trois modes de réticulation sont notés en (2) dans le tableau I. Ces deux exemples 1 et 2 correspondent à l'art antérieur.

### Exemples 3—4

Un copolymère statistique d'oxyde d'éthylène et d'oxyde de propylène est réticulé par les trois modes de réticulation précédents, d'une part avec un rapport O/Li = 12 (exemple 3), d'autre part avec un rapport O/Li = 20 (exemple 4), le copolymère comportant 25% en mole d'oxyde de propylène et ayant un poids moléculaire de 10 000.

Exemples 5 A 7

On réalise les mêmes mesures mais pour les composés décrits aux lignes 5 à 7 du tableau I avec un rapport O/Li égal à 20.

Exemple 8

Cet exemple concerne un copolymère statistique réticulé oxyde d'éthylène/méthylglycidyléther (copolymère OE/MGE) tel que décrit à la ligne D du tableau I, le rapport O/Li étant égal à 20.

Résultats

Tous les résultats sont notés dans le tableau I. Les exemples 1 et 2 correspondent à l'art antérieur. L'exemple n° 2 correspond à un produit exemplifié dans la citation FR—A—2 485 274 et peut être comparé à l'exemple n° 2 de cette citation. Selon cet exemple, on obtient une conductivité de $10^{-4}\Omega^{-1}cm^{-1}$ à 50°C, alors que selon l'exemple n° 2 de la présente invention, on a T-4 = 100°C.

Cette différence de résultats entre l'exemple n° 2 de la citation FR—A—2 485 274 et l'exemple n° 2 de la présente invention s'explique aisément puisque le sel en solution dans l'exemple n° 2 est le tétraphényl borure de sodium qui est meilleur conducteur que le lithium et que, en outre, la concentration de sel, exprimée en rapport atomique sodium sur oxygène est très faible, elle est de l'ordre de 1/72, alors que dans l'exemple n° 2, le repport Li/O est égal à 1/12. Il est en effet connu que le conductivité augmente quand la concentration en sel diminue, particulièrement à basse température.

Exemple 9

On a réalisé un copolymère statistique à base d'oxyde d'éthylène contenant 3% molaire d'allyglycidyl-éther. L'emploi d'un catalyseur de polymérisation de type alumoxane solvaté permet, lors de la copolymérisation, de conserver les fonctions allyliques. Le polyéther ainsi obtenu, contient environ 50 milli-équivalents d'insaturation pour 100 g de polymère. Il est mis en oeuvre pour former des électrolytes et/ou des électrodes composites par voie exsolvant en présence d'un génerateur de radicaux libres consistant en azo-biisobutyronitrile. La réticulation du materiau est obtenue par simple élévation de la température au-dessus de 60°C. Ce matériau réticulé est amorphe à température ambiante et présente des propriétés remarquables d'élasticité (jusqu'à 500% d'allongement à la rupture), qui le rendent particulièrement intéressant pour la réalisation de générateurs électrochimiques fonctionnant à température ambiante. En effet, un tel générateur présente un taux d'utilisation très élevé et quasiment constant sur un grand nombre de cycles alors qu'il est parfaitement connu que le taux d'utilisation est un des phénomènes les plus limitatifs de générateurs dont le matériau à conduction ionique est un matériau macromoléculaire selon l'art antérieur, particulièrement pour des températures de fonctionnement inférieures à 60°C.

Cette amélioration du taux d'utilisation s'observe de la même manière pour tous les matériaux réalisés selon l'invention et en particulier pour les matériaux selon l'invention décrits dans le tableau I.

TABLEAU I

| N° | NATURE DU POLYMERE | PM | O/Li | Triisocyanate Aliphatique (Art antérieur) | | | $CH_3SiCl_3$ | | | T.O.A | | |
|---|---|---|---|---|---|---|---|---|---|---|---|---|
| | | | | T-6 °C | T-5 °C | T-4 °C | T-6 °C | T-5 °C | T-4 °C | T-6 °C | T-5 °C | T-4 °C |
| 1 | POE | 3000 | 12 | 38 | 50 | 90 | 24 | 40 | 80 | 20 | 30 | 56 |
| 2 | OE.OP.OE Séquencé | 8500 | 12 | 38 | 65 | 110 | 34 | 70 | 110 | 30 | 40 | 75 |
| 3 | OE 75% OP 25% Statistique | 10000 | 12 | 18 | 39 | 74 | 9 | 25 | 55 | 8 | 24 | 56 |
| 4 | OE 75% OP 25% Statistique | 10000 | 20 | 8 | 25 | 70 | 3 | 21 | 57 | 2 | 20 | 57 |
| 5 | OE 90% OP 10% Statistique | 5000 | 20 | 21 | 36 | 64 | 9 | 20 | 48 | 8 | 21 | 47 |
| 6 | OE 90% OP 10% Statistique | 7500 | 20 | 18 | 25 | 50 | 4 | 20 | 45 | - | - | - |
| 7 | OE 80% OP 20% Statistique | 4400 | 20 | 14 | 26 | 63 | 2 | 23 | 58 | - | - | - |
| 8 | OE 80% MGE 20% Statistique | 7000 | 20 | 7 | 27 | 62 | 0 | 21 | 55 | - | - | - |

**Revendications**

1. Matériau macromoléculaire à conduction ionique constitué d'une solution d'un sel dans un copolymère réticulé statistique de l'oxyde d'éthylène et d'un deuxième motif choisi pour conserver à la chaîne son caractère de polyéther et présent dans le copolymère en quantité molaire comprise entre 1,5 et 30%, caractérisé en ce que ledit copolymère réticulé statistique renferme des ponts de réticulation comportant au moins un atome d'un élément au moins divalent choisi parmi silicium, cadmium, bore, titane, aluminium, zinc, magnésium et étain ou bien résulte de la réticulation par voie radicalaire ou ionique d'insaturations réparties le long ou en bout des chaînes du copolymère non réticulé correspondant.

2. Matériau macromoléculaire à conduction ionique selon la revendication 1, caractérisé en ce que le deuxième motif du copolymère statistique réticulé est choisi parmi les éthers cycliques répondant à la formule

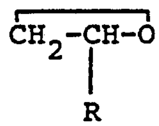

dans laquelle R représente, soit un radical Ra alkyle, alcényle ou alcynyle, notamment en $C_1$ à $C_{12}$ et de préférence en $C_1$ à $C_4$, soit un radical $—CH_2—O—Re—Ra$, dans lequel Ra a la même signification que ci-dessus et Re représente un radical polyéther de formule $—(CH_2—CH_2—O)—_p$, p variant de 0 à 10.

3. Matériau macromoléculaire à conduction ionique selon la revendication 2, caractérisé en ce que le radical R dans la formule des éthers cycliques est un radical Ra alkyle et en ce que la teneur molaire du copolymère en deuxième motif est au plus égale à 25%.

4. Matériau macromoléculaire à conduction ionique selon la revendication 3, caractérisé en ce que le sel dissous dans le copolymère réticulé statistique est Li $ClO_4$.

5. Matériau macromoléculaire à conduction ionique selon la revendication 3, caractérisé en ce que le sel dissous dans le copolymère réticulé statistique est le trifluorométhanesulfonate de lithium et en ce que la teneur molaire du copolymère réticulé statistique en deuxième motif est comprise entre 5 et 25%.

6. Matériau macromoléculaire à conduction ionique selon l'une des revendications 2 à 5, caractérisé en ce que le deuxième motif du copolymère réticulé statistique est l'oxyde de propylène.

7. Matériau macromoléculaire à conduction ionique selon la revendication 2, caractérisé en ce que le deuxième motif du copolymère réticulé statistique est le méthylglycidyléther.

8. Matériau macromoléculaire à conduction ionique selon la revendication 2, caractérisé en ce que le deuxième motif du copolymère réticulé statistique est l'allylglycidyléther.

9. Matériau macromoléculaire à conduction ionique selon la revendication 1, caractérisé en ce que le deuxième motif du copolymère réticulé statistique est choisi parmi les éthers cycliques, substitués ou non, dont le cycle comporte plus de trois maillons.

10. Matériau macromoléculaire à conduction ionique selon la revendication 9, caractérisé en ce que lesdits éther cycliques comportant plus de trois maillons dans le cycle sont choisis parmi tétrahydrofuranne, dioxanne-1,3, dioxolanne, les dérivés substitués de ces composés et les composés oxétannes.

11. Matériau macromoléculaire à conduction ionique selon la revendication 1, caractérisé en ce que l'atome d'élément au moins divalent présent dans les ponts de reticulation du copolymère statistique réticulé est relié à au moins une chaîne polymérique par un atome d'oxygène.

12. Matériau macromoléculaire à conduction ionique selon la revendication 1, caractérisé en ce que le copolymère réticulé statistique est obtenu par réaction de fonctions réticulables du copolymère statistique non réticulé sur un ou plusieurs agents de réticulation propres à fournir lesdits ponts de réticulation comportant au moins un atome dudit élément au moins divalent.

13. Matériau macromoléculaire à conduction ionique selon la revendication 11, caractérisé en ce que le copolymère réticulé statistique est obtenu par réaction de fonctions réticulables du copolymère statistique non réticulé sur un ou plusieurs agents de réticulation propres à fournir lesdits ponts de réticulation comportant au moins un atome dudit élément au moins divalent relié à au moins une chaîne polymérique par un atome d'oxygène.

14. Matériau macromoléculaire à conduction ionique selon la revendication 1 ou 8, caractérisé en ce que le copolymère réticulé statistique est obtenu par reticulation du copolymère non réticulé statistique correspondant au moyen d'un générateur de radicaux libres ou par irradiation.

**Patentansprüche**

1. Makromolekular Stoff mit Ionenleitung, bestehend aus einer Salzlösung in einem statistischen vernetzten Copolymerisat aus Ethylenoxid und einer zweiten Gruppe, die so ausgewählt ist, daß die Kette ihren Polyethercharakter beibehält und im Copolymerisat in einer molaren Menge zwischen 1,5 und 30% enthalten ist, dadurch gekennzeichnet, daß das statistische vernetzte Copolymerisat Vernetzungsbrücken enthält, die wengistens ein Atom eines zumindest zweiwertigen Elements aus der Gruppe Silizium, Cadmium, Bor, Titan, Aluminium, Zink, Magnesium un Zinn umfassen oder sich aus der Vernetzung durch

Radikale oder durch ionische Ungesättigtheiten, die über die gesamte Länge verteilt sind oder sich am Ende der Ketten des entsprechenden nichtvernetzten Copolymerisats befinden, ergibt.

2. Makromolekularer Stoff mit Ionenleitung nach Anspruch 1, dadurch gekennzeichnet, daß die zweite Gruppe des statistischen vernetzten Copolymerisats ausgewählt ist unter den cyclischen Ethern der Formel

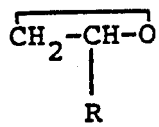

worin R entweder einen Alkyl-, Alkenyl- oder Alkinylrest Ra, insbesondere einen $C_1$—$C_{12}$—, vorzugsweise $C_1$—$C_4$-Rest oder einen Rest —$CH_2$—O—Re—Ra bedeutet, worin Ra dieselbe Bedeutung wie oben angegeben hat und Re einen Polyetherrest der Formel $—(CH_2—CH_2—O)—_p$ bedeutet, wobei p einen Wert zwischen 0 und 10 aufweist.

3. Makromolekularer Stoff mit Ionenleitung nach Anspruch 2, dadurch gekennzeichnet, daß der Rest R in der Formel der cyclischen Ether ein Alkylrest Ra ist und der Molargehalt an zweiter Gruppe in dem Copolymerisat höchstens 25% beträgt.

4. Makromolekularer Stoff mit Ionenleitung nach Anspruch 3, dadurch gekennzeichnet, daß das im statistischen vernetzten Copolymerisat gelöste Salz $LiClO_4$ ist.

5. Makromolekularer Stoff mit Ionenleitung nach Anspruch 3, dadurch gekennzeichnet, daß das im statistischen vernetzten Copolymerisat gelöste Salz Li-Trifluormethansulfonat ist und der Molargehalt an zweiter Gruppe im statistischen vernetzten Copolymerisat zwischen 5 und 25% beträgt.

6. Makromolekularer Stoff mit Ionenleitung nach einem der Ansprüche 2 bis 5, dadurch gekennzeichnet, daß die zweite Gruppe des statistischen vernetzten Copolymerisats Propylenoxid ist.

7. Makromolekularer Stoff mit Ionenleitung nach Anspruch 2, dadurch gekennzeichnet, daß die zweite Gruppe des statistischen vernetzten Copolymerisats Methylglycidylether ist.

8. Makromolekularer Stoff mit Ionenleitung nach Anspruch 2, dadurch gekennzeichnet, daß die zweite Gruppe des statistischen vernetzten Copolymerisats Allylglycidylether ist.

9. Makromolekularer Stoff mit Ionenleitung nach Anspruch 1, dadurch gekennzeichnet, daß die zweite Gruppe des statistischen vernetzten Copolymerisats ausgewählt ist unter gegebenenfalls substituierten cyclischen Ethern, deren Ring mehr als drei Glieder aufweist.

10. Makromolekularer Stoff mit Ionenleitung nach Anspruch 9, dadurch gekennzeichnet, daß die cyclischen Ether mit mehr als drei Ringgliedern ausgewählt sind unter Tetrahydrofuran, Dioxan-1,3, Dioxolan, den substituierten Derivaten dieser Verbindungen und Oxetanverbindungen.

11. Makromolekularer Stoff mit Ionenleitung nach Anspruch 1, dadurch gekennzeichnet, daß das Atom des wenigstens zweiwertigen Elements in den Vernetzungsbrücken des statistischen vernetzten Copolymerisats über ein Sauerstoffatom mit wenigstens einer Polymerkette verknüpft ist.

12. Makromolekularer Stoff mit Ionenleitung nach Anspruch 1, dadurch gekennzeichnet, daß das statistische vernetzte Copolymerisat erhalten wurde durch Umsetzung der vernetzbaren Funktionen des statistischen nichtvernetzten Copolymerisats mit einem oder mehreren Vernetzungsmitteln, die geeignet sind, die Vernetzungsbrücken zu leifern, welche wenigstens ein Atom des genannten wenigstens zweiwertigen Elements enthalten.

13. Makromolekularer Stoff mit Ionenleitung nach Anspruch 11, dadurch gekennzeichnet, daß das statistische vernetzte Copolymerisat erhalten wurde durch Umsetzung der vernetzbaren Funktionen des statistischen nichtvernetzten Copolymerisats mit einem oder mehreren Vernetzungsmitteln, die geeignet sind, die Vernetzungsbrücken zu liefern, welche wenigstens ein Atom des genannten wenigstens zweiwertigen Elements enthalten, das über ein Sauerstoffatom mit wenigstens einer Polymerkette verknüpft ist.

14. Makromolekularer Stoff mit Ionenleitung nach Anspruch 1 bis 8, dadurch gekennzeichnet, daß das statistische vernetzte Copolymerisat durch Vernetzung des entsprechenden statistischen nichtvernetzten Copolymerisats mit Hilfe einer freie Radikale freisetzenden Verbindung oder durch Bestrahlung erhalten wurde.

## Claims

1. Ionically conductive macromolecular material consisting of a solution of a salt in a statistical cross-linked copolymer of ethylene oxide and one second unit selected for preserving the polyether nature of the chain and present in the copolymer in a molar quantity of between 1.5 and 30%, characterised in that the said statistical cross-linked copolymer incorporates cross-links comprising at least one atom of an element which is at least divalent selected from silicon, cadmium, boron, titanium, aluminium, zinc, magnesium and tin or resulting from the free radical or ionic cross-linking of unsaturated bonds distributed along or at the end of the corresponding non-cross-linked copolymer chains.

2. Ionically conductive macromolecular material according to Claim 1, characterised in that the second unit of the cross-linked statistical copolymer is selected from among the cyclic ethers having the formula

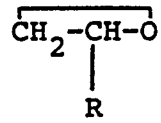

in which R is either an alkyl, alkenyl or alkynyl radical Ra, in particular $C_1$ to $C_{12}$ and preferably $C_1$ to $C_4$, or a $—CH_2—O—Re—Ra$ radical in which Ra has the same meaning as above and Re is a polyether radical having the formula $—(CH_2—CH_2—O)—_p$, p varying from 0 to 10.

3. Ionically conductive macromolecular material according to Claim 2, characterised in that the radical R in the cyclic ether formula is an alkyl radical Ra and in that the molar content of the copolymer in the second unit is at most 25%.

4. Ionically conductive macromolecular material according to Claim 3, characterised in that the salt dissolved in the statistical cross-linked copolymer is Li $ClO_4$.

5. Ionically conductive macromolecular material according to Claim 3, characterised in that the salt dissolved in the statistical cross-linked copolymer is lithium trifluormethanesulphonate, and in that the molar content of the statistical cross-linked copolymer in the second unit is between 5 and 25%.

6. Ionically conductive macromolecular material according to any one of Claims 2 to 5, characterised in that the second unit of the statistical cross-linked copolymer is propylene oxide.

7. Ionically conductive macromolecular material according to Claim 2, characterised in that the second unit of the statistical cross-linked copolymer is methylglycidylether.

8. Ionically conductive macromolecular material according to Claim 2, characterised in that the second unit of the statistical cross-linked copolymer is allylglycidylether.

9. Ionically conductive macromolecular material according to Claim 1, characterised in that the second unit of the statistical cross-linked copolymer is selected from substituted or non-substituted cyclic ethers, of which the ring comprises more than 3 links.

10. Ionically conductive macromolecular material according to Claim 9, characterised in that the said cyclic ethers comprising more than 3 links in the ring ae selected from tetrahydrofurane, 1,3-dioxane, dioxolane, the substituted derivatives of these compounds and oxetane compounds.

11. Ionically conductive macromolecular material according to Claim 1, characterised in that the atom of the element which is at least divalent present in the cross-links of the cross-linked statistical copolymer is connected to at least one polymer chain by an oxygen atom.

12. Ionically conductive macromolecular material according to Claim 1, characterised in that the statistical cross-linked copolymer is obtained by the reaction of cross-linkable groups of the non-cross-linked statistical copolymer with one or more cross-linking agents suitable for providing the said cross-links comprising at least one atom of the said element which is at least divalent.

13. Ionically conductive macromolecular material according to Claim 11, characterised in that the statistical cross-linked copolymer is obtained by the reaction of cross-linkable groups of the non-cross-linked statistical copolymer with one or more cross-linking agents suitable for providing the said cross-links comprising at least one atom of the said element which is at least divalent and connected to at least one polymer chain by an oxygen atom.

14. Ionically conductive macromolecular material according to Claim 1 or 8, characterised in that the statistical cross-linked copolymer is obtained by cross-linking of the corresponding non-cross-linked statistical copolymer by means of a free radical generator or by irradiation.